# EUROPÄISCHE PATENTSCHRIFT

(11) **EP 3 179 844 B1**
(45) Veröffentlichungstag und Bekanntmachung des Hinweises auf die Patenterteilung: **08.05.2019**
(21) Anmeldenummer: 15744922.4
(22) Anmeldetag: 31.07.2015
(51) Int. Cl.: A01D 41/12, A01D 61/00, A01D 67/00

(54) **SELBSTFAHRENDE ERNTEMASCHINE**
SELF-PROPELLED HARVESTING MACHINE
RÉCOLTEUSE AUTOMOTRICE

(30) Priorität: 13.08.2014 DE 102014216112
(43) Veröffentlichungstag der Anmeldung: 21.06.2017
(73) Patentinhaber: Schmid, Walter, 89168 Niederstotzingen (DE)
(72) Erfinder: Schmid, Walter, 89168 Niederstotzingen (DE)
(74) Vertreter: Dr. Weitzel & Partner
(86) Internationale Anmeldenummer: PCT/EP2015/067689
(87) Internationale Veröffentlichungsnummer: WO 2016/023774

(56) Entgegenhaltungen:
- EP-A1- 1 226 745
- EP-A1- 1 808 063
- DE-A1- 2 533 757
- DE-A1- 19 710 172
- US-A- 5 772 503

## Beschreibung

Die Erfindung betrifft eine selbstfahrende Erntemaschine nach der im Oberbegriff von Anspruch 1 näher definierten Art.

Eine selbstfahrende Erntemaschine, insbesondere ein Mähdrescher oder auch ein Rübenernter, sind aus dem allgemeinen Stand der Technik bekannt. Bei derartigen selbstfahrenden Erntemaschinen ist es typischerweise so, dass diese eine abnehmbare Ernteeinheit aufweisen, welche in Fahrtrichtung vorne montierbar ist. Diese abnehmbare Ernteeinheit wird im Allgemeinen für den Erntebetrieb auf dem Feld montiert und kann für einen Fahrbetrieb auf öffentlichen Straßen demontiert werden. Diese Ernteeinheit ist beispielsweise bei einem Mähdrescher so ausgebildet, dass von der Ernteeinheit die Halme geschnitten werden, wobei sie durch eine sogenannte Haspel aufrechtgehalten und dem Mähwerk zugeführt werden. Die Ernteeinheit umfasst typicherweise außerdem eine Förderschnecke, welche die abgeschnittenen Halme in den zentralen Bereich der Ernteeinheit fördert.

Die Weiterverarbeitung des Ernteguts, beispielsweise bei einem Mähdrescher das Dreschen, also das Trennen von Körnern und Halmen sowie nachfolgende Verarbeitungsschritte wie Sieben, Häckseln der Halme und dergleichen, laufen in einer Verarbeitungseinheit im Inneren der Erntemaschine ab. Über einen Förderkanal für das Erntegut ist dabei die Ernteeinheit im montierten Zustand mit der Verarbeitungseinheit verbunden. Der Förderkanal kann beispielsweise über Förderbänder oder Sternförderer die Förderung des Ernteguts übernehmen. Ein Rübenernter weist einen sehr ähnlichen Aufbau auf, bei dem im vorderen Bereich das Grüngut abgetrennt und die Rüben geerntet und dann über den Förderkanal zur Verarbeitungseinheit gefördert werden, in welcher ein Großteil der Erde und des Schmutzes von den Rüben abgeschüttelt und die Rüben in Speichervolumina gesammelt werden können.

Die selbstfahrenden Erntemaschinen können mit einer sehr breiten Ernteeinheit ausgestattet werden, um so sehr leistungsfähig zu ernten, also in kurzer Zeit eine vergleichsweise große Fläche abzuernten. Da diese Ernteeinheiten zu breit für einen Fahrtbetrieb der selbstfahrenden Erntemaschine auf öffentlichen Straßen sind, da hier die Breite typischerweise auf maximal 3 m begrenzt ist, werden diese für den Fahrbetrieb abmontiert. Der Förderkanal kann für den Fahrbetrieb im Allgemeinen in Fahrtrichtung vorne angehoben werden, um so keine Gefährdung für andere Teilnehmer im Straßenverkehr darzustellen.

Um nun mit einer derartigen selbstfahrenden Erntemaschine auf einem Feld fahren zu können und dabei den Untergrund nicht unnötig stark zu verdichten, sind vergleichsweise große Radanordnungen üblich. Hierzu werden typischerweise große und breite Einzelräder oder Zwillingsräder oder gegebenenfalls auch Gleis- beziehungsweise Raupenketten eingesetzt. Diese Radanordnungen sind zumeist in einer Breite von mindestens 60 cm Gesamtbreite jeder Radanordnung ausgebildet, um die Flächenpressung der selbstfahrenden Erntemaschine auf dem Feld möglichst gering zu halten. Wenn die selbstfahrende Erntemaschine im öffentlichen Straßenverkehr bewegt werden muss, ist auch mit einer Sondergenehmigung eine begrenzte Gesamtbreite von 3 m das Maximum. Daher ist wegen der erforderlichen Breite der Radanordnungen sowie der notwendigen Antriebe des Förderkanals nur eine maximale Breite des Förderkanals in der Größenordnung von ca. 1,5 m möglich. Da das Erntegut nach dem Förderkanal, insbesondere das in der Art einer Matte durch den Förderkanal geförderte Erntegut bei einem Mähdrescher, nicht oder nur bedingt in seiner Breite aufgeweitet werden kann, sind typischerweise die Funktionsmaschinen der Verarbeitungseinheit in derselben Breite oder lediglich um wenige Prozent breiter als der Förderkanal ausgebildet. Die Ernteleistung wird also letztlich durch die maximale Breite des Förderkanals, welche durch die Anforderungen der Straßenverkehrsordnungen beschränkt wird, begrenzt. Dies stellt einen nicht unerheblichen Nachteil dar, da hierdurch längere Erntezeiten je Flächeneinheit notwendig sind, was wiederum mit einem erhöhten Verbrauch an Treibstoff sowie erhöhten Maschinen- und Arbeitskosten einhergeht.

Aus der DE 197 10 172 A1 ist eine landwirtschaftliche Erntemaschine bekannt, welche, um den Vorschriften der Straßenverkehrszulassungsordnung zu genügen, in der Lage ist, eine Radspurverstellung vorzunehmen, sodass im Erntebetrieb eine breitere Radspur als im Fahrbetrieb auf der Straße vorliegt.

Ferner beschreibt die EP 1 808 063 A1 eine selbstfahrende landwitschaftliche Erntemaschine, bei welcher ein Erntevorsatz im Frontbereich an einen Einzugsförderer angebracht werden kann, wobei dieser Erntevorsatz schwenkbar um eine vertikale Achse ausgebildet ist.

Die Aufgabe der hier vorliegenden Erfindung besteht nun darin, eine selbstfahrende Erntemaschine anzugeben, welche diese Nachteile vermeidet, und eine hohe Ernteleistung bei gleichzeitiger Möglichkeit, die selbstfahrende Erntemaschine über öffentliche Straßen zu fahren, gewährleistet.

Erfindungsgemäß wird diese Aufgabe durch eine selbstfahrende Erntemaschine mit den Merkmalen im Anspruch 1 gelöst. Vorteilhafte Ausgestaltungen und Weiterbildungen ergeben sich aus den hiervon abhängigen Unteransprüchen.

Bei der erfindungsgemäßen selbstfahrenden Erntemaschine ist es vorgesehen, dass ein den Förderkanal im Erntebetrieb zumindest teilweise aufnehmender Aufnahmeraum in seiner Breite quer zur Fahrtrichtung verstellbar ist. Ein solcher in seiner Breite quer zur Fahrtrichtung verstellbarer Aufnahmeraum für den Förderkanal ermöglicht den Einsatz eines sehr viel breiteren Förderkanals, als dies bei den bisherigen selbstfahrenden Erntemaschinen üblich ist. Insbesondere kann der Aufnahmeraum quer zur Fahrtrichtung in seine geringe Breite gestellt werden, um mit der selbstfahrenden Erntemaschine in einem Fahrbetrieb auf einer öffentlichen Straße zu fahren. Der Förderkanal ist in dieser Situation nicht in dem Aufnahmeraum vorhanden, sodass dieser insgesamt breiter ausgebildet werden kann, als der Aufnahmeraum in seiner für den Fahrbetrieb auf öffentlichen Straßen vorgesehenen Breite. Wird die selbstfahrende Erntemaschine dann auf ein Feld gefahren, dann kann der Aufnahmeraum in seiner Breite entsprechend verstellt, also verbreitert werden. Er kann dann den Förderkanal aufnehmen, sodass insgesamt der Einsatz eines Förderkanals möglich wird, welcher sehr viel breiter ist, als die Förderkanäle gemäß dem Stand der Technik. So reicht beispielsweise eine Vergrößerung des Aufnahmeraums für den Förderkanal auf ca. 2 m Breite bereits aus, um einen Förderkanal mit deutlich höherer Kapazität einsetzen zu können. Im Anschluss an einen solchen Förderkanal mit im Erntebetrieb größerer Breite lassen sich dann im Inneren der selbstfahrenden Erntemaschine alle nachfolgenden Funktionsmaschinen der Verarbeitungseinheit ebenfalls auf eine solche größere Breite auslegen, sodass, ohne dass die selbstfahrende Erntemaschine in ihrem Fahrzustand für die Fahrt über öffentliche Straßen breiter wird, eine deutliche Erhöhung der Ernteleistung aufgrund der Möglichkeit des Einsatzes eines breiteren Förderkanals und damit verbunden einer breiteren Verarbeitungseinheit erzielen lässt. Dies ist insbesondere bei Mähdreschern, im Prinzip aber auch bei Rübenerntern oder dergleichen ein entscheidender Vorteil.

Dabei ist der Förderkanal zumindest in Fahrtrichtung vorne in seiner Höhe verstellbar ist. Bei der erfindungsgemäßen selbstfahrenden Erntemaschine kann nun ein derartiger Förderkanal verbaut werden. Er kann gemäß einer vorteilhaften Weiterbildung dieser Idee in der oberen Höhe oberhalb der Radeinheiten liegen, sodass im Fahrbetrieb der angehobene Förderkanal oberhalb der Radeinheiten liegt. Diese können damit in ihre die geringere Breite aufweisende Stellung verfahren werden. Der Förderkanal ist in dieser Situation oberhalb seines Aufnahmeraums für den Erntebetrieb angeordnet. Kommt die selbstfahrende Erntemaschine auf einem Feld an, dann können die Radeinheiten nach außen verschoben werden, sodass der Aufnahmeraum für den Förderkanal im Erntebetrieb die größere Breite aufweist. Jetzt kann der in seiner oberen Höhe oberhalb der Radeinheiten angeordnete Förderkanal abgesenkt werden und passt, obwohl seine Breite größer ist als die Breite des Aufnahmeraums im Fahrbetrieb, problemlos in den jetzt verbreiterten Aufnahmeraum. Anschließend kann an den Förderkanal in an sich bekannter Art und Weise die Ernteeinheit angeschlossen werden und die selbstfahrende Erntemaschine kann mit entsprechend großer Ernteleistung betrieben werden.

Gemäß einer sehr vorteilhaften Weiterbildung der erfindungsgemäßen selbstfahrenden Erntemaschine kann es nun ferner vorgesehen sein, dass der Aufnahmeraum zwischen zwei rechts und links des Aufnahmeraums befindlichen Radeinheiten angeordnet ist. Diese Radeinheiten können beispielsweise, wie bei einem herkömmlichen Mähdrescher, aus zwei angetriebenen ungelenkten Rädern im Frontbereich der selbstfahrenden Erntemaschine bestehen. Genauso gut sind alternative Radeinheiten denkbar, beispielsweise Zwillingsräder oder in Fahrtrichtung hintereinander folgende Doppelräder oder ähnliches. Dabei sind die rechtsseitige und linksseitige Radeinheit in ihrem Abstand zueinander verstellbar, sodass sich der Aufnahmeraum in seiner Breite verändert. Bei dieser besonders bevorzugten Variante der selbstfahrenden Erntemaschine können also die Vorderräder oder die Radeinheiten der Vorderräder, falls Zwillingsräder, Doppelräder oder dergleichen eingesetzt werden, in ihrer Gesamtheit für den Erntebetrieb aus einer für den Fahrbetrieb auf öffentlichen Straßen vorgesehenen Stellung nach außen bewegt werden. Dies kann insbesondere hydraulisch erfolgen, kann also einfach aus dem Führerhaus der selbstfahrenden Erntemaschine aus gesteuert werden. Das hydraulische Ausstellen beziehungsweise seitliche Ausfahren der Radeinheiten schafft dann zwischen den beiden Radeinheiten im Bereich des Aufnahmeraums für den Förderkanal zusätzlichen Platz, sodass ein Förderkanal eingesetzt werden kann, welcher deutlich breiter ist, als die Breite des Aufnahmeraums in dem zur Fahrt auf öffentlichen Straßen vorgesehenen Zustand. Dementsprechend kann auch die Verarbeitungseinheit breiter ausgebildet sein. Da diese typischerweise hinter den vorderen Radeinheiten angeordnet ist, wird ihre Breite durch die Räder nicht begrenzt, sodass diese bis zu einer maximalen Breite von ca. 2,50 m problemlos aufgebaut werden kann, da dann rechts und links immer noch ausreichend Raum für Antriebe, Klappen und dergleichen bleibt, ohne dass die selbstfahrende Erntemaschine ihre zulässige Gesamtbreite von 3 m für die Fahrt auf öffentlichen Straßen überschreitet.

Eine ergänzende oder alternative Ausgestaltung der selbstfahrenden erfindungsgemäßen Erntemaschine sieht es ferner vor, dass der Förderkanal in seiner Breite verstellbar ausgebildet ist. In dem Förderkanal werden typischerweise Förderbänder oder sogenannte Sternförderer zur Förderung des Ernteguts eingesetzt. Sowohl Sternförderer als auch Förderbänder können quer zur Förderrichtung verschieblich zueinander ausgebildet werden. Bei Sternförderern können diese beispielsweise bis zu einem gewissen Grad ineinander eingreifen, sodass die Breite des Förderkanals verstellt werden kann. Bei einem Förderband ist beispielsweise der Einsatz von zwei in Querrichtung untereinander positionierten Förderbändern denkbar, welche bei einer Verringerung der Gesamtbreite des Förderkanals ineinander hineingefahren werden können. Ebenso ist es denkbar, ein Förderband aus einzelnen stabförmigen Elementen auszubilden, welche jeweils in sich teleskopierbar ausgebildet sind, sodass die Gesamtbreite des Förderkanals und der in ihm befindlichen Fördermittel verstellbar ist und dementsprechend von einer schmalen Stellung für den Fahrbetrieb in eine breite Stellung für den Erntebetrieb angepasst werden kann.

Wir bereits erwähnt, können die Radeinheiten aus einem oder mehreren einzelnen Rädern bestehen. Gemäß einer vorteilhaften Weiterbildung der erfindungsgemäßen selbstfahrenden Erntemaschine kann es nun ferner vorgesehen sein, dass jede der Radeinheiten mehrere in der Fahrtrichtung und/oder der Höhe versetzt angeordnete Räder aufweist. Diese in Fahrtrichtung und/oder der Höhe versetzt angeordnete Räder können beispielsweise zwei hintereinander angeordnete Räder sein, um mit vergleichsweise schmalen Rädern dennoch eine geringe Flächenpressung der selbstfahrenden Erntemaschine auf dem Ackerboden zu realisieren. Insbesondere können derartig angeordnete Räder jedoch, gemäß einer vorteilhaften Ausgestaltung der erfindungsgemäßen Idee, von einer Gleiskette umgeben sein. Eine solche Gleiskette beziehungsweise Raupenkette um mehrere in Fahrtrichtung und/oder Höhe versetzt angeordnete Räder ist eine besonders elegante Lösung, um die auf die Fläche des Ackerbodens aufgebrachten Kräfte zu minimieren, da diese sich über den Einsatz der Gleiskette sehr gleichmäßig auf eine sehr große Fläche verteilen. Gleichzeitig können die Räder einer solchen Raupenanordnung als Radeinheit mit vergleichsweise kleinem Durchmesser ausgebildet werden. Hierdurch wird jede der aus einer solchen Raupenanordnung ausgebildeten Radeinheiten in der Höhe vergleichsweise klein, insbesondere im Vergleich zu einem einzelnen die Radeinheit ausbildenden Rad, welches zum Erzielen der gleichen Kraftverteilung auf die Aufstandsfläche entsprechend größer ausgebildet werden muss. Hierdurch besteht die Möglichkeit, durch eine vergleichsweise kleine Wegstrecke zur Anhebung des Förderkanals den oben beschriebenen Aufbau zu realisieren, bei welchem der Förderkanal im Fahrbetrieb der selbstfahrenden Erntemaschine auf einer öffentlichen Straße oberhalb des verkleinerten Aufnahmeraums für den Förderkanal im Erntebetrieb zu liegen kommt.

Wie bereits erwähnt, können sämtliche Verstellungen idealerweise über hydraulische Stelleinheiten erfolgen, da diese im Bereich der Landmaschinen ohnehin allgemein üblich und in ihrem Einsatz erprobt sind. Über entsprechende Steuerungsmechanismen und Schalter kann verhindert werden, dass beispielsweise im Fahrbetrieb die Radeinheiten nach außen gestellt werden beziehungsweise dass ein Absenken des Förderkanals erfolgt, bevor die Radeinheiten ihre äußere Endstellung erreicht haben, falls der Förderkanal als in der Höhe verschwenkbarer Förderkanal ausgebildet ist.

Weitere vorteilhafte Ausgestaltungen der erfindungsgemäßen selbstfahrenden Erntemaschine ergeben sich aus dem Ausführungsbeispiel, welches nachfolgend unter Bezugnahme auf die Figuren näher beschrieben ist.

Dabei zeigen:
- Figur 1: eine Seitenansicht einer möglichen Ausführungsform einer selbstfahrenden Erntemaschine im Fahrbetrieb;
- Figur 2: eine Frontansicht der Erntemaschine gemäß Figur 1 im Fahrbetrieb;
- Figur 3: eine Frontansicht der Erntemaschine gemäß Figur 2 in der Vorbereitung für den Erntebetrieb; und
- Figur 4: eine Seitenansicht der selbstfahrenden Erntemaschine gemäß Figur 3 im Erntebetrieb; und
- Figur 5: eine schematische Draufsicht auf einen Förderkanal in einer möglichen Ausführungsform der Erfindung.

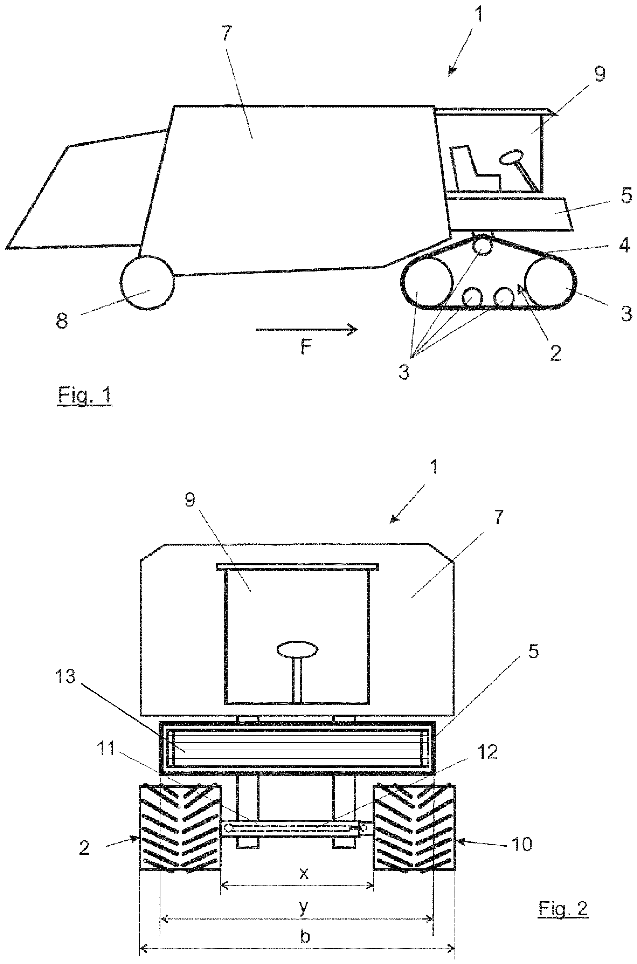

In der Darstellung der Figur 1 ist eine selbstfahrende Erntemaschine am Beispiel eines schematisch angedeuteten Mähdreschers 1 prinzipmäßig dargestellt. Die selbstfahrende Erntemaschine 1 soll dabei in der in Figur 1 dargestellten Seitenansicht in einem Zustand zur Fahrt auf einer öffentlichen Straße sein. Hierfür ist in dem in Fahrtrichtung F vorderen Bereich der Erntemaschine 1 eine rechtsseitige vordere Radeinheit 2 zu erkennen, welche in dem hier dargestellten Ausführungsbeispiel als Raupenanordnung mit mehreren Rädern 3 als Antriebs- und Führungsräder sowie einer Gleiskette beziehungsweise Raupenkette 4 ausgebildet ist. Dieser Aufbau der Radeinheit 2 als Raupenanordnung hat dabei den Vorteil, dass dieser in der Gesamthöhe bei sehr guter Verteilung der Kraft auf den Ackerboden vergleichsweise klein ausgeführt werden kann. In der Darstellung der Figur 1 oberhalb dieser Radanordnung 2 ist ein Förderkanal 5 zu erkennen, welcher im Erntezustand mit einer hier nicht dargestellten Ernteeinheit 6 verbunden werden kann, und welcher das über die Ernteeinheit 6 abgeerntete Erntegut zu einer im Inneren der Erntemaschine 1 angeordneten und hier nicht erkennbaren Verarbeitungseinheit 17 fördert. Die Verarbeitungseinheit ist im Inneren der Erntemaschine 1, insbesondere im Bereich des mit 7 bezeichneten Aufbaus angeordnet. Dieser Aufbau entspricht soweit dem Stand der Technik, die Verarbeitungseinheit 17 ist jedoch, wie es später noch näher beschrieben werden wird, in ihrer Bauart breiter ausgeführt, als die im Stand der Technik üblichen Verarbeitungseinheiten. Im Heckbereich der Erntemaschine 1 ist ein lenkbares Rad 8 zu erkennen, insbesondere wird die Erntemaschine zwei lenkbare Räder in diesem Bereich aufweisen, wobei das hier erkennbare Rad das auf der gegenüberliegenden Seite befindliche Rad entsprechend verdeckt. Oberhalb des Förderkanals 5 und in Fahrtrichtung F vor dem Aufbau 7 ist außerdem ein mit 9 bezeichnetes Führerhaus prinzipmäßig angedeutet. In diesem Führerhaus 9 nimmt der Fahrer/Bediener der selbstfahrenden Erntemaschine 1 Platz, um diese, in dem in Figur 1 dargestellten Betriebszustand über öffentliche Straßen zu steuern.

In der Darstellung der Figur 2 ist eine Ansicht derselben Erntemaschine 1 in demselben Betriebszustand, wie in der Darstellung der Figur 1 gezeigt, von vorne zu erkennen. Auch hier ist mittig das Führerhaus 9 zu erkennen, wobei der Aufbau 7 rechts und links seitlich das Führerhaus 9 entsprechend überragt. Der gesamte Aufbau ist dabei beispielsweise 3 m breit, was beispielhaft durch die mit b eingezeichnete Breite angedeutet ist. Dies ist die maximal zulässige Breite für die Fahrt auf öffentlichen Straßen und ist deshalb als begrenzende Abmessung bei derartigen selbstfahrenden Erntemaschinen 1 allgemein üblich. In der Prinzipdarstellung der selbstfahrenden Erntemaschine 1 von vorne ist zusätzlich zu der rechtsseitigen Radeinheit 2 nun außerdem eine linksseitige Radeinheit 10 zu erkennen. Zwischen dieser rechtsseitigen Radeinheit 2, immer in Fahrtrichtung F der selbstfahrenden Erntemaschine 1 gesehen, und der linksseitigen Radeinheit 10 befindet sich eine angedeutete Achse 11, welche über einen angedeuteten Hydraulikzylinder 12 in ihrer Breite verstellbar ist.

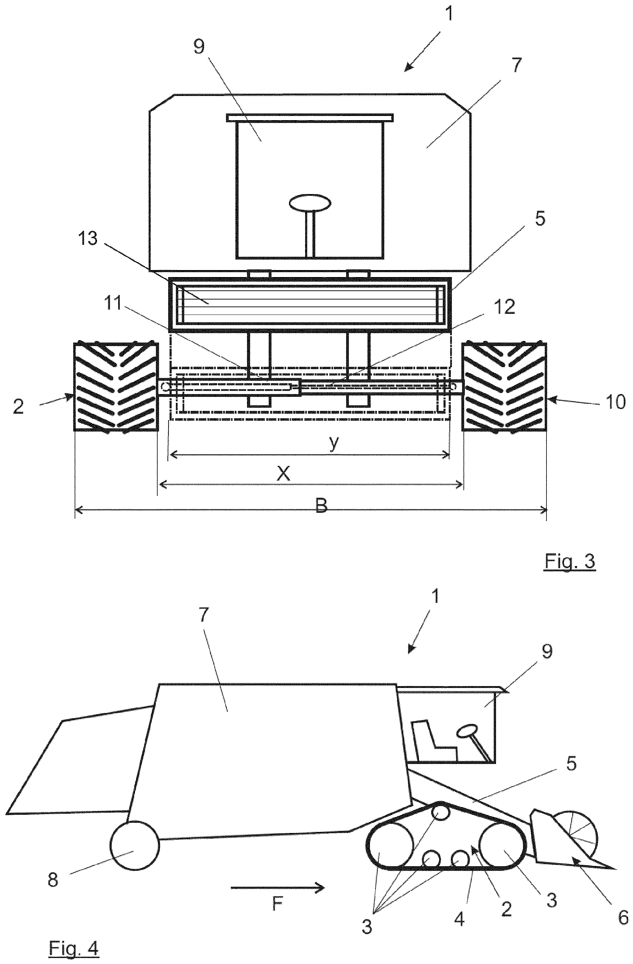

In der Darstellung der Figur 2 ist die maximal zulässige Breite b für den Fahrbetrieb auf öffentlichen Straßen angedeutet. Kommt die Erntemaschine 1 nun auf ein Feld, so können über den Hydraulikzylinder 12 die beiden Radeinheiten 2, 10 über die teleskopierbare Achse 11 nach außen verschoben werden. Dieser Zustand der selbstfahrenden Erntemaschine 1 ist in der Darstellung der Figur 3 zu erkennen. Die Gesamtbreite B, von der Außenkante der linksseitigen Radeinheit 10 zur Außenkante der rechtsseitigen Radeinheit 2, ist nun größer als Breite b und damit für den Betrieb auf öffentlichen Straßen nicht mehr zulässig. Gleichzeitig ist in der Darstellung der Figuren 2 und 3 zu erkennen, dass ein Aufnahmeraum zwischen den beiden Radeinheiten 2, 10 für den Förderkanal 5 bei dem Betriebszustand für die öffentliche Straße und der Gesamtbreite b lediglich die Breite x aufweist. Diese ist kleiner als die Breite y des Förderkanals 5. Der Förderkanal 5 kann also während des Betriebs auf öffentlichen Straßen nur in seiner in der Darstellung der Figur 2 erkennbaren oberen Position gehalten werden. In dieser Position lässt sich die Ernteeinheit nicht montieren, was für die Fahrt auf der öffentlichen Straße jedoch auch nicht notwendig ist.

In der Darstellung der Figur 3 ist nun zu erkennen, dass die Breite x des Aufnahmeraums für den Förderkanal 5 zwischen den beiden Radeinheiten 2, 10 sich ebenfalls vergrößert hat und in der Darstellung der Figur 3 jetzt mit X bezeichnet ist. Die Breite des Aufnahmeraums X ist nun breiter als die Breite y des Förderkanals 5, sodass dieser problemlos in den Raum zwischen den beiden Radeinheiten 2, 10 abgesenkt werden kann. Dieser Zustand mit abgesenktem Förderkanal 5 und dann daran anmontierter Ernteeinheit 6 ist in der abschließenden Figur 4 in einer Seitenansicht analog zur Darstellung in Figur 1 zu erkennen. Durch die vergrößerte Breite des Förderkanals 5, welche nun annähernd der zulässigen Gesamtbreite b der selbstfahrenden Erntemaschine 1 beim Betrieb auf öffentlichen Straßen entspricht, kann auch die in dem Aufbau 7 angeordnete Verarbeitungseinheit 17, welche ja ohnehin hinter und/oder oberhalb den Radeinheiten angeordnet ist, entsprechend größer ausgebaut werden. Eine Steigerung der Breite des Förderkanals 5 und der Verarbeitungseinheit von beispielsweise 1,5 m auf 2 bis 2,5 m erlaubt eine Steigerung des Durchsatzes an Erntegut von ca. 30% bis ca. 65 %, ohne dass der Grundaufbau der selbstfahrenden Erntemaschine 1 verändert oder vergrößert werden muss. Dies ermöglicht eine schnellere Ernte und damit eine Ersparnis an Maschinenzeit, Lohnkosten und benötigtem Treibstoff. Gelichzeitig kann der Aufbau bei Bedarf auch mit einer größeren Ernteeinheit 6 versehen werden, da die Förderung und Weiterverarbeitung des Ernteguts nun leistungsfähiger geworden ist. Die selbstfahrenden Erntemaschine 1 kann aber nach wie vor auf öffentlichen Straßen betrieben werden, indem der Förderkanal 5 entsprechend der Darstellung in den Figuren 1 bis 3 angehoben und die Gesamtbreite des Aufnahmeraums beziehungsweise des Fahrzeugs auf die schmaleren Werte x, b eingestellt wird.

Als Alternative zu den im Ausführungsbeispiel dargestellten Raupenanordnungen als Radeinheiten 2, 10 wären selbstverständlich auch einfache Räder, Zwillingsreifen oder zwei beziehungsweise mehrere in Fahrtrichtung hintereinander angeordnete Räder grundsätzlich denkbar. Anstelle des Anhebens des Förderkanals 5 in eine obere Höhe, welche oberhalb der Räder liegt, wäre es auch denkbar, den Förderkanal in seiner Breite y teleskopierbar auszuführen, um diesen so -in beliebiger Position zusammen mit den Radeinheiten 2, 10 beziehungsweise dem sich zwischen diesen ausbildenden Aufnahmeraum- in der Breite y dem jeweiligen Betriebszustand anzupassen.

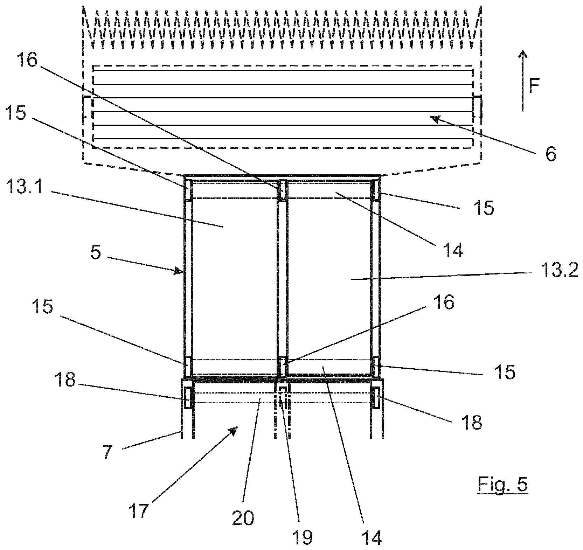

Wie oben erwähnt ist es nun so, dass der Förderkanal 5 und die Verarbeitungseinheit 17 in ihrer Breite gesteigert werden kann. Dies führt nun sowohl beim Förderkanal 5 als auch bei der Verarbeitungseinheit 17 dazu, dass Wellen 14, 20, welche quer zur Fahrtrichtung F verlaufen, typischerweise einer höheren Biegebelastung ausgesetzt sind, als bei herkömmlichen Aufbauten. Deshalb kann es vorgesehen sein, dass der Förderkanal 5 beziehungsweise seine Transportmittel 13, welche in der Figur 5 als Förderbänder angedeutet und mit den Bezugszeichen 13.1 und 13.2 bezeichnet sind, entsprechend quer zur Fahrtrichtung zweigeteilt ausgeführt sein können. Zwischen den beiden Teilen kann dann ein weiteres Lager eingesetzt werden. Es könnten alternativ dazu auch zwei getrennte Aufbauten, beispielsweise mit einer jeweiligen Breite von 1 bis 1,25 m nebeneinander eingesetzt werden. In der Darstellung der Figur 5 ist dies am Beispiel des Förderkanals 5 angedeutet, indem zwei angedeutete Wellen 14 einmal an der der angedeuteten Ernteeinheit 6 zugewandten Ende und einmal an dem dem Aufbau 7 der Erntemaschine 1 zugewandten Ende jeweils quer zur Fahrtrichtung F außen mit über mit 15 bezeichnete Lager gelagert sind. Zusätzlich ist die jeweilige Welle 14 mittig über die mit 16 bezeichneten Lager aufgenommen, sodass die Biegebelastung der Welle 14 durch eine Verringerung des Abstandes zwischen den Lagern in Axialrichtung der Welle, also quer zur Fahrtrichtung F, entsprechend verringert wird. Dabei kann je nach Ausführungsform das Transportmittel 13, in diesem Fall das Förderband, ebenfalls geteilt ausgeführt sein, wie es hier durch die Förderbänder 13.1 und 13.2 beispielhaft angedeutet ist. Genauso gut könnte das Förderband nicht geteilt ausgeführt sein, wie es in den Figuren 2 und 3 beispielhaft erkennbar ist.

In Fahrtrichtung F hinten an den Förderkanal 5 schließt sich dann der Aufbau 7 an, in dem die bereits mehrfach angesprochene Verarbeitungseinheit angeordnet ist. Diese ist hier dargestellt und mit dem Bezugszeichen 17 versehen. Sie kann entweder einteilig ausgeführt sein oder kann vorzugsweise ebenfalls quer zur Fahrtrichtung F zweigeteilt ausgeführt sein, wie es hier durch die strichpunktierte Linie angedeutet ist. Dies ermöglicht es auch hier, neben den beiden seitlichen Lagern 18 ein mittiges Lager 19 mit einzusetzen, um auch hier die Biegebelastung von Wellen 20 entsprechend zu reduzieren. Auch hier ist es analog zum Förderkanal 5 denkbar, zwei getrennte Ernteeinheiten nebeneinander in dem Aufbau 7 zu positionieren, welche dann jeweils ein seitliches Lager 18 und ein mittiges Lager 19 für jede ihrer Wellen 20 aufweisen können.

Die Biegebelastung der Wellen 14, 20 wird entsprechend verringert, sodass auf aufwändige Neukonstruktionen und Auslegungen mechanischer Bauteile weitgehend verzichtet werden kann und dennoch ein höherer Durchsatz, als bei den Aufbauten im Stand der Technik zu erzielen ist, wenn auch der Durchsatz durch die mittige Teilung sich gegenüber einem ungeteilten Aufbau des Förderkanals 5 und/oder Transportmittels 13 und/oder der Verarbeitungseinheit 17 minimal verringert.

## Patentansprüche

1. Selbstfahrende Erntemaschine (1) mit:
1.1 einer abnehmbaren Ernteeinheit (6), welche in Fahrtrichtung (F) vorne montierbar ist;
1.2 einer Verarbeitungseinheit (17) im Inneren; und
1.3 einem Förderkanal (5) für das Erntegut, welcher die Ernteeinheit (6) in montiertem Zustand mit der Verarbeitungseinheit (17) verbindet, wobei
1.4 der Förderkanal (5) zumindest in Fahrtrichtung (F) vorne in seiner Höhenposition verstellbar ist,
**dadurch gekennzeichnet, dass**
1.5 ein den Förderkanal (5) im Erntebetrieb zumindest teilweise aufnehmender Aufnahmeraum in seiner Breite (x, X) quer zur Fahrtrichtung (F) verstellbar ist, und
1.6 der Förderkanal (5) in seiner oberen Höhenposition oberhalb der Radeinheiten (2, 10) liegt und in einer oder verschiedenen weiter unten liegenden Höhenpositionen für den Erntebetrieb jeweils zumindest teilweise zwischen den Radeinheiten (2, 10) in dem Aufnahmeraum liegt.

2. Selbstfahrende Erntemaschine (1) nach Anspruch 1, **dadurch gekennzeichnet, dass** der Aufnahmeraum zwischen wenigstens zwei rechts und links des Aufnahmeraums befindlichen Radeinheiten (2, 10) angeordnet ist, wobei die rechtsseitige und die linksseitige Radeinheit (2, 10) in ihrem Abstand zueinander verstellbar sind, sodass sich der Aufnahmeraum in seiner Breite (x, X) ändert.

3. Selbstfahrende Erntemaschine (1) nach einem der Ansprüche 1 oder 2, **dadurch gekennzeichnet, dass** der Förderkanal (5) in seiner Breite (y) verstellbar ausgebildet ist.

4. Selbstfahrende Erntemaschine (1) nach einem der Ansprüche 1 bis 3, **dadurch gekennzeichnet, dass** jede der Radeinheiten (2, 10) ein Rad oder ein Zwillingsrad aufweist.

5. Selbstfahrende Erntemaschine (1) nach einem der Ansprüche 1 bis 4, **dadurch gekennzeichnet, dass** jede der Radeinheiten (2, 10) mehrere in Fahrtrichtung (F) und/oder in der Höhe versetzt zueinander angeordnete Räder (3) aufweist.

6. Selbstfahrende Erntemaschine (1) nach Anspruch 5, **dadurch gekennzeichnet, dass** die Räder (3) von einer Gleiskette (4) umgeben sind.

7. Selbstfahrende Erntemaschine (1) nach einem der Ansprüche 1 bis 6, **dadurch gekennzeichnet, dass** zur Verstellung der Breite hydraulische Stellantriebe (Hydraulikzylinder 12) vorgesehen sind.

8. Selbstfahrende Erntemaschine (1) nach einem der Ansprüche 1 bis 7, **dadurch gekennzeichnet, dass** der Förderkanal (5), seine Transportmittel (13, 13.1, 13.2) und/oder eine Verarbeitungseinheit (17) quer zur Fahrtrichtung (F) zweigeteilt ausgeführt ist/sind, wobei eine Lagerung von Wellen (14, 20) des Förderkanals (5), seiner Transportmittel (13, 13.1, 13.2) und/oder der Verarbeitungseinheit (17) seitliche Lager (15, 18) und wenigstens ein mittiges Lager (16, 19) aufweist.

## Claims

1. Self-propelled harvesting machine (1) having:
1.1 a removable harvesting unit (6), which can be mounted at the front in the direction of travel (F);
1.2 a processing unit (17) in the interior; and
1.3 a conveying channel (5) for the harvested material, which, when mounted, connects the harvesting unit (6) with the processing unit (17), wherein
1.4 the conveying channel (5) is adjustable in its height position at least at the front in the direction of travel (F)
**characterized in that**
1.5 a receiving space, which at least partially receives the conveying channel (5) in the harvesting mode, is adjustable in the width (x, X) thereof transversely to the direction of travel (F); and
1.6 the conveying channel (5) is above the wheel units (2, 10) in its upper height position and in each case at least partially between the wheel units (2, 10) in one or various height positions located further downward for the harvesting mode.

2. Self-propelled harvesting machine (1) according to claim 1, **characterized in that** the receiving space is arranged between at least two wheel units (2, 10) located to the left and to the right of the receiving space, wherein the right-sided and left-sided wheel units (2, 10) are adjustable in the distance to one another, so that the receiving space changes in the width (x, X) thereof.

3. Self-propelled harvesting machine (1) according to one of claims 1 or 2, **characterized in that** the conveying channel (5) is designed to be adjustable in the width (y) thereof.

4. Self-propelled harvesting machine (1) according to one of claims 1 to 3, **characterized in that** each of the wheel units (2, 10) comprises a wheel or a twin wheel.

5. Self-propelled harvesting machine (1) according to one of claims 1 to 4, **characterized in that** each of the wheel units (2, 10) comprises multiple wheels (3) arranged offset to one another in the direction of travel (F) and/or in height.

6. Self-propelled harvesting machine (1) according to claim 5, **characterized in that** the wheels (3) are surrounded by a track chain (4).

7. Self-propelled harvesting machine (1) according to one of claims 1 to 6, **characterized in that** hydraulic actuator drives (hydraulic cylinder 12) are provided for adjustment of the width.

8. Self-propelled harvesting machine (1) according to one of claims 1 to 7, **characterized in that** the conveying channel (5), its transport means (13, 13.1, 13.2) and/or a processing unit (17) are designed in two parts transversely to in the direction of travel (F), wherein a bearing of shafts (14, 20) of the conveying channel (5), its transport means (13, 13.1, 13.2) and/or of the processing unit (17) comprises lateral bearings (15, 18) and at least one central bearing (16, 19).

## Revendications

1. Moissonneuse autopropulsée (1) avec :
1.1 une unité moissonneuse (6) amovible, qui peut être montée sur l'avant dans le sens de la marche (F),
1.2 une unité de traitement (17) à l'intérieur et
1.3 un canal d'acheminement (5) de la matière moissonnée, qui relie l'unité moissonneuse (6) à l'unité de traitement (17) dans l'état monté,
1.4 dans laquelle la hauteur du canal d'acheminement (5) peut être modifiée au moins sur l'avant dans le sens de la marche (F),
**caractérisée en ce que**
1.5 la largeur (x, X) d'un espace de logement recevant au moins en partie le canal d'acheminement (5) pendant le fonctionnement de la moissonneuse peut être modifiée dans le sens transversal par rapport au sens de la marche (F), et
1.6 le canal d'acheminement (5) se trouve au-dessus des unités de roue (2, 10) dans sa position haute et au moins en partie entre les unités de roue (2, 10), dans l'espace de logement, dans chacune de deux positions en hauteur plus basses différentes pour le fonctionnement de la moissonneuse.

2. Moissonneuse autopropulsée (1) selon la revendication 1, **caractérisée en ce que** l'espace de logement est disposé entre au moins deux unités de roue (2, 10) qui se trouvent à droite et à gauche de l'espace de logement, l'écart entre l'unité de roue de droite et celle de gauche (2, 10) pouvant être modifié de façon à changer la largeur (x, X) de l'espace de logement.

3. Moissonneuse autopropulsée (1) selon l'une des revendications 1 ou 2, **caractérisée en ce que** la largeur (y) du canal d'acheminement (5) est modifiable.

4. Moissonneuse autopropulsée (1) selon l'une des revendications 1 à 3, **caractérisée en ce que** chacune des unités de roue (2, 10) présente une roue ou des roues jumelées.

5. Moissonneuse autopropulsée (1) selon l'une des revendications 1 à 4, **caractérisée en ce que** chacune des unités de roue (2, 10) présente plusieurs roues (3) disposées de façon décalée dans le sens de la marche (F) et/ou en hauteur.

6. Moissonneuse autopropulsée (1) selon la revendication 5, **caractérisée en ce que** les roues (3) sont entourées par une chenille (4).

7. Moissonneuse autopropulsée (1) selon l'une des revendications 1 à 6, **caractérisée en ce que** des actionneurs hydrauliques (vérins hydrauliques 12) sont prévus pour modifier la largeur.

8. Moissonneuse autopropulsée (1) selon l'une des revendications 1 à 7, **caractérisée en ce que** le canal d'acheminement (5), ses moyens de transport (13, 13.1, 13.2) et/ou une unité de traitement (17) sont réalisés en deux parties dans le sens transversal par rapport au sens de la marche (F), un support des arbres (14, 20) du canal d'acheminement (5), de ses moyens de transport (13, 13.1, 13.2) et/ou de l'unité de traitement (17) présentant des supports latéraux (15, 18) et au moins un support central (16, 19).
